# EUROPEAN PATENT APPLICATION

(11) **EP 4 016 823 A1**
(43) Date of publication of application: **22.06.2022**
(21) Application number: 19945760.7
(22) Date of filing: 18.09.2019
(51) Int. Cl.: H02M 1/36, H02J 3/18

(54) **MODULAR MULTILEVEL CONVERTER AND DISCHARGE METHOD THEREFOR**

(71) Applicant: Siemens Aktiengesellschaft, 80333 München (DE)
(72) Inventor: ZHANG, Wenping, Beijing 100102 (CN); BARUSCHKA, Lennart, Beijing 100102 (CN); LIAO, Hua, Beijing 100102 (CN)
(74) Representative: Isarpatent
(86) International application number: PCT/CN2019/106488
(87) International publication number: WO 2021/051315

(57) **Abstract**

A modular multilevel converter and a discharge method therefor. The modular multilevel converter (502) comprises: a triangular modular multilevel converter (504), wherein at least one branch (ab, bc, ac) of the triangular modular multilevel converter (504) is connected to a discharge circuit (506).

## Description

### Technical Field

The present disclosure generally relates to the field of circuit technologies, and more specifically, to a modular multilevel converter and a discharge method therefor.

### Background Art

In applications of direct-current transmission, microgrids, or renewable energy, modular multilevel converter (MMC) systems offer many advantages over conventional voltage source converters. Two common connections are present for the MMC systems: a "double star" connection and a "delta" connection. Modular multilevel converters using the "delta" connection are applicable to, for example, static synchronous compensators (STATCOM).

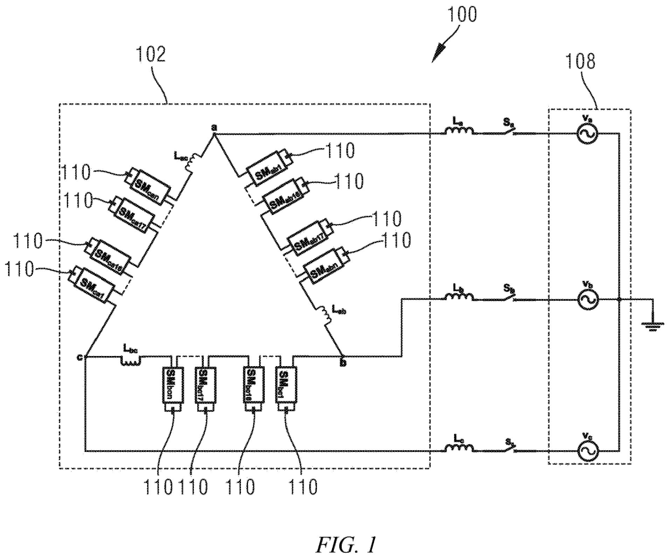

FIG. 1 is a topology diagram of a delta MMC system 100 in the prior art. Block 102 is a modular multilevel converter using the "delta" connection, and block 108 is an alternating current power source side. The MMC includes three branches: ab, ac, and bc in the "delta" connection, and a, b, and c are separately intersections of two branches. Each branch includes N submodules SM_{ab1} to SM_{abn}, SM_{ac1} to SM_{acn}, or SM_{bc1} to SM_{bcn} of the modular multilevel converter. Each submodule has a capacitor. For ease of description, capacitors of all the submodules are referred to as submodule capacitors and are all marked as 110. The intersections a, b, and c are connected to alternating current power sources vₐ, v_{b}, and v_{c} through inductors Lₐ, L_{b}, and L_{c} and power switches Sₐ, S_{b}, and S_{c} respectively.

When the MMC is switched off, energy needs to be discharged from each submodule capacitor 110, to ensure system safety. Therefore, how to quickly discharge energy from a submodule capacitor is a common problem for MMCs. In addition, as few components as possible need to be added for discharge, to reduce system costs and complexity.

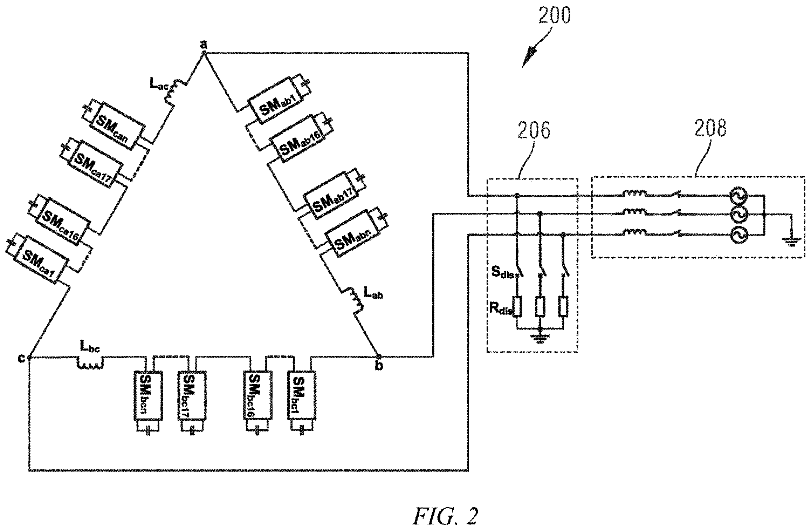

FIG. 2 is a topology diagram of an MMC system 200 with a discharge circuit in the prior art. A discharge circuit 206 (including one three-phase switch and three discharge resistors) is mounted on an AC (alternating current power source) side 208. During discharge of energy from a submodule capacitor, the switch of the discharge circuit 206 is turned on. One disadvantage of this solution is that a relatively large number of components are added.

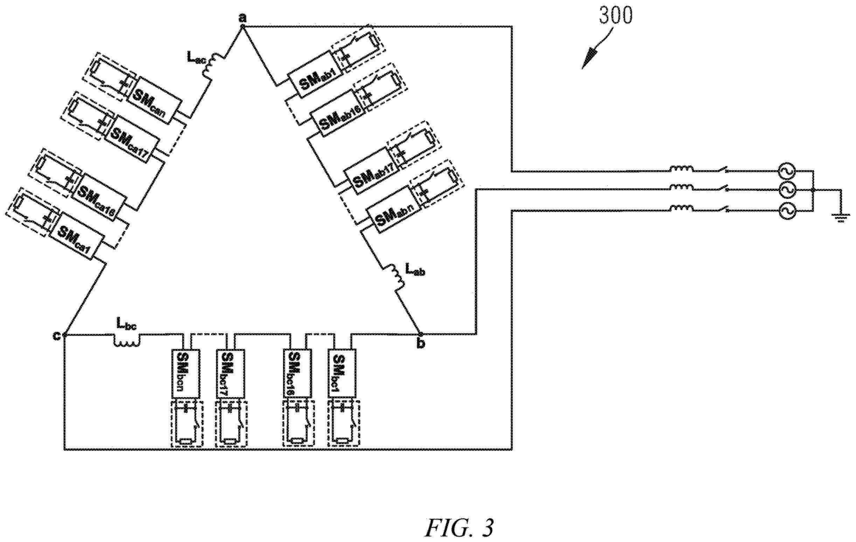

FIG. 3 is a topology diagram of another MMC system 300 with a discharge circuit in the prior art. A discharge circuit (a circuit in a dashed box) is mounted for each submodule. During discharge of energy from a submodule capacitor, a corresponding relay is connected. In this way, the energy may be discharged from the submodule capacitor in a corresponding discharge resistor. The disadvantage of this solution is that a very large number of components are added.

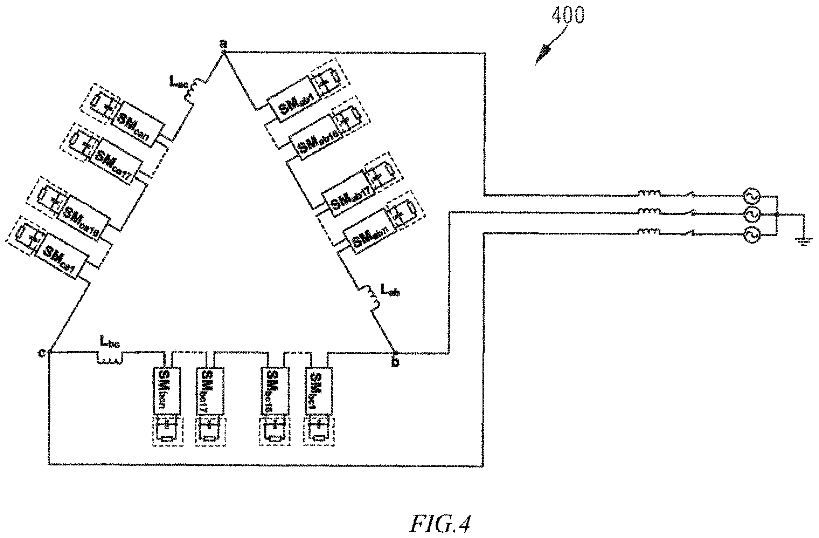

FIG. 4 shows yet another MMC system 400 with a discharge circuit in the prior art. A large resistor (a circuit in a dashed box) is connected to each submodule capacitor. Energy can be discharged from the submodule capacitor in a corresponding discharge resistor. This solution mainly has the following disadvantages: First, a discharge time is very long. Second, during normal operation, these added resistors consume energy, which reduces system efficiency.

### Summary of the Invention

The brief summary of the present invention is given below to provide a basic understanding of some aspects of the present invention. It should be understood that the summary is not an exhaustive summary of the present invention. The summary is neither intended to determine the key or important part of the present invention, nor to limit the scope of the present invention. The object thereof is merely to give some concepts in a simplified form, as a prelude to the more detailed description presented later.

In view of the above, according to one aspect of the present disclosure, a modular multilevel converter is provided, including: a delta modular multilevel converter, where a discharge circuit is connected to at least one branch of the delta modular multilevel converter.

Optionally, in an example of the above aspect, the discharge circuit includes at least one switch and at least one resistor that are connected in parallel.

Optionally, in an example of the above aspect, the switch is a contactor or a power semiconductor device.

According to another aspect of the present disclosure, a modular multilevel converter is provided, including: a double-star modular multilevel converter, where a discharge circuit is connected in at least one of the following positions of the double-star modular multilevel converter: between upper bridge arms of any two of three phases, between lower bridge arms of any two of the three phases, on an upper bridge arm of any one of the three phases, and on a lower bridge arm of any one of the three phases.

Optionally, in an example of the above aspect, the discharge circuit includes at least one switch and at least one resistor that are connected in parallel.

Optionally, in an example of the above aspect, the switch is a contactor or a power semiconductor device.

According to another aspect of the present disclosure, a method for discharging the modular multilevel converter described above is provided, the method including: keeping the switch of the discharge circuit on when the modular multilevel converter operates normally; and turning off the switch of the discharge circuit and discharging energy from a submodule capacitor of the modular multilevel converter through the resistor of the discharge circuit when the modular multilevel converter is switched off.

Optionally, in an example of the above aspect, the turning off of the switch of the discharge circuit and discharging energy from a submodule capacitor of the modular multilevel converter through the resistor of the discharge circuit when the modular multilevel converter is switched off includes: blocking a drive signal output by a control system of the modular multilevel converter, so that an output current of the modular multilevel converter is reduced to zero; disconnecting the modular multilevel converter from an alternating current power source; turning off the switch, so that the resistor is inserted into a branch of the modular multilevel converter; releasing again the drive signal output by the control system, so that a circulating current is generated in the modular multilevel converter; and when the circulating current flows through the resistor, discharging the energy from the submodule capacitor of the modular multilevel converter.

Optionally, in an example of the above aspect, a value of the circulating current is controlled by using a circulating current reference in the control system, and the circulating current reference includes: a current provided by an energy balance loop of the control system and an additional current component provided by an additional current component generation unit of the control system, where the current provided by the energy balance loop is used to balance energy of a branch of the modular multilevel converter, and the additional current component is used to adjust the value of the circulating current.

Optionally, in an example of the above aspect, the additional current component is a direct current or an alternating current.

In comparison with a circuit in the prior art, in the modular multilevel converter according to the present disclosure, only one switch and one resistor may be added. Therefore, a smaller number of components are added. In this way, system costs and the system volume and complexity can be reduced.

The modular multilevel converter and the discharge method therefor according to the present disclosure can implement quick discharge. Therefore, a discharge time is greatly shortened and the safety of a converter system is improved.

In addition, the value of the added current component is adjusted to adjust the value of the circulating current, so that the discharge time can be controlled.

### Brief Description of the Drawings

The foregoing and other objectives, features, and advantages of the present invention can be more easily understood with reference to the following descriptions of embodiments of the present invention in conjunction with the accompanying drawings. Components in the accompanying drawings are merely for illustrating the principle of the present invention. In the accompanying drawings, same or similar technical features or components are represented by using same or similar reference signs.
FIG. 1 is a topology diagram of a delta modular multilevel converter (MMC) system in the prior art;
FIG. 2 is a topology diagram of an MMC with a discharge circuit in the prior art;
FIG. 3 is a topology diagram of an MMC with a discharge circuit in the prior art;
FIG. 4 is a topology diagram of an MMC with a discharge circuit in the prior art;
FIG. 5 is a circuit topology diagram of an MMC system according to an embodiment of the present disclosure;
FIG. 6a to FIG. 6c each are a schematic diagram of a specific process of discharging an MMC according to the present disclosure; and
FIG. 7 is a circuit topology diagram of an MMC system according to another embodiment of the present disclosure.

**Reference signs**

| | | | |
|---|---|---|---|
| 100: | Delta MMC system | 102: | Delta MMC |
| 108: | Alternating current power source | ab, ac, and bc: | Branches |
| | | 110 and 510: | Submodule capacitors |
| SM_{ab1} SM_{bc1} to SM_{abn}, SM_{ac1} to SM_{acn}, and to SM_{bcn}: | Submodules | | |
| a, b, and c: | Intersections | Lₐ, L_{b}, L_{c}, L_{ab}, L_{bc}, and L_{ac}: | Inductors |
| Sa, Sb, and Sc: | Power switches | vₐ, v_{b}, and v_{c}: | Alternating current power sources |
| 200: | MMC system | 208: | Alternating current power source |
| 206: | Discharge circuit | 300: | MMC system |
| 400: | MMC system | 500: | MMC system |
| | | 508: | Alternating current power source |
| 502: | MMC | | |
| 504: | Delta MMC | 506: | Discharge circuit |
| 5061: | Switch | 5062: | Resistor |
| 600: | Control system | 601: | Drive signal |
| 602: | Modulation unit | 603: | Current loop |
| 604: | Energy loop | 605: | Reactive power loop |
| 606: | Energy balance loop | 700: | MMC system |
| 702: | MMC | 708: | Alternating current power source |
| 701: | Direct current side | 704: | Double-star MMC |
| 706: | Discharge circuit | 7061: | Switch |
| 7062: | Resistor | 607: | Additional current component generation unit |
| A, B, and C: | Phase A, phase B, and phase C | S_{ac}: | Alternating current switch |
| S_{dc1} and S_{dc2}: | Direct current switch | Lₐ₁, Lₐ₂, Lₐ₃, Lₐ₄, Lₐ₅, and Lₐ₆: | Inductors |

### Detailed Description of Embodiments

The subject matter described herein is now discussed with reference to exemplary implementations. It should be understood that the discussion of these implementations is merely intended to help a person skilled in the art to better understand and implement the subject matter described herein, but not to limit the protection scope, applicability or examples set forth in the claims. The functions and arrangement of the discussed elements can be changed without departing from the protection scope of the present disclosure. Various processes or components may be omitted, replaced, or added in various examples as required. For example, the described method may be performed in an order different from the one described, and the steps may be added, omitted, or combined. In addition, the features described in some examples can also be combined in other examples.

As used herein, the term "include" and variants thereof represent an open term, which means "including but not limited to". The term "based on" represents "at least partially based on". The terms "an embodiment" and "the embodiment" represent "at least one embodiment". The term "another embodiment" represents "at least one other embodiment". The terms "first", "second", and the like may refer to different or the same objects. Other definitions, whether explicit or implicit, can be included below. Unless expressly specified in the context, the definition of a term is consistent throughout the specification.

To solve the above problems, the present disclosure provides a modular multilevel converter and a method for discharging the modular multilevel converter. The modular multilevel converter and the discharge method therefor according to the present disclosure can shorten a discharge time and reduce the number of added components.

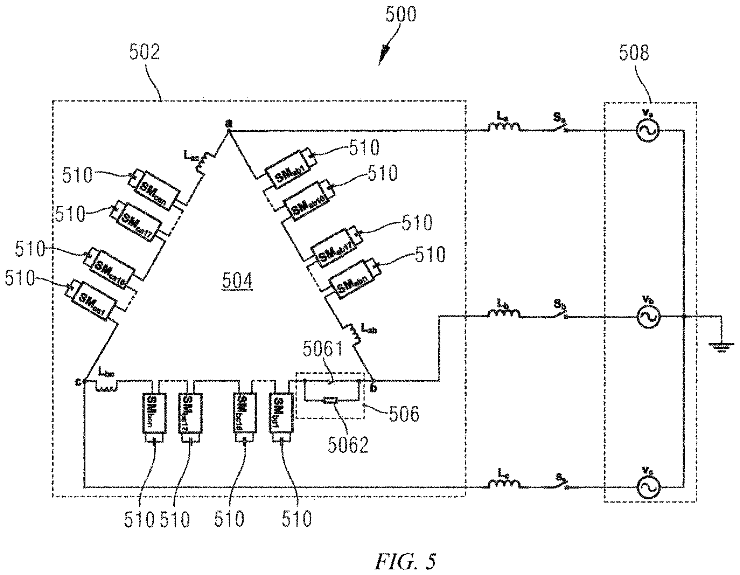

FIG. 5 is a circuit topology diagram of a modular multilevel converter (MMC) system 500 according to the present disclosure.

In FIG. 5, block 502 is a modular multilevel converter according to the present disclosure, and block 508 is an alternating current power source. The modular multilevel converter in FIG. 5 operates through a delta connection.

In the modular multilevel converter 502 according to the present disclosure shown in FIG. 5, a discharge circuit 506 is added to one branch of a delta modular multilevel converter 504.

A circuit topology structure of the delta modular multilevel converter 504 is similar to that of the modular multilevel converter 104 using a delta connection in the prior art shown in FIG. 1, and includes three branches ab, ac, and bc in the delta connection. Each branch includes N submodules SM_{ab1} to SM_{abn}, SM_{ac1} to SM_{acn}, or SM_{bc1} to SM_{bcn} of the modular multilevel converter. Each submodule has a capacitor. For ease of description, capacitors of all the submodules are referred to as submodule capacitors and are all marked as 510. A specific circuit topology of the delta modular multilevel converter 504 is no longer described in detail herein.

In the present specification, technical improvements made in the present invention are mainly described, and components or topology structures of a circuit commonly used in the prior art are not described in detail.

In an example, the discharge circuit 506 may include one switch 5061 and one resistor 5062 that are connected in parallel.

Specifically, the switch 5061 may be a contactor or a power semiconductor device such as an IGBT or a MOSFET. Preferably, a contactor is used as the switch because power consumption of the contactor is low.

A person skilled in the art may understand that the discharge circuit 506 is not limited to only one switch and one resistor and the switch is not limited to a specific type. Details are not described herein again.

The discharge circuit 506 may be connected to any one of the a-b branch, the b-c branch, or the c-a branch of the delta modular multilevel converter 504.

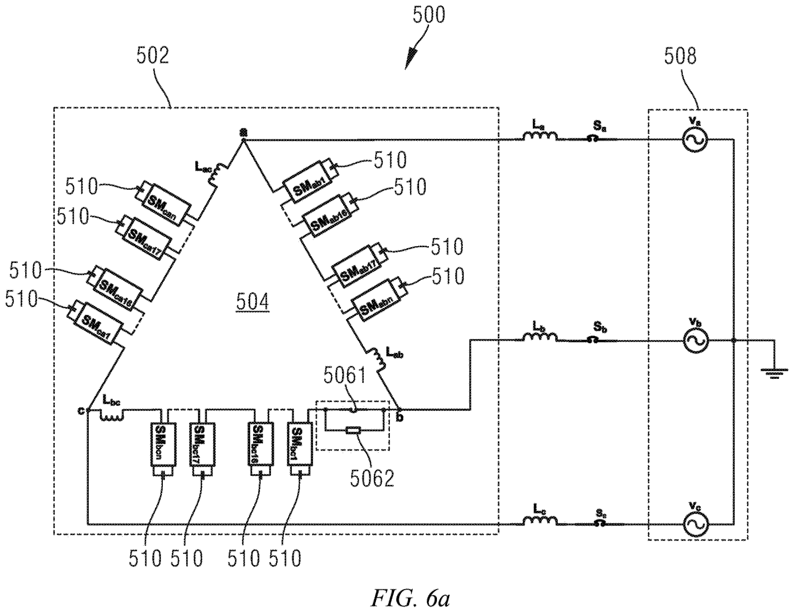

A specific process of the method for discharging the modular multilevel converter 502 according to the present disclosure is described below in conjunction with FIG. 6a to FIG. 6c.

FIG. 6a is a circuit diagram of a modular multilevel converter system 500 operating normally. When the modular multilevel converter system 500 operates normally, the switch 5061 of the discharge circuit 506 is turned on and the resistor 5062 of the discharge circuit 506 is short-circuited. Therefore, normal operation of the delta modular multilevel converter 502 is not affected.

When the modular multilevel converter system 500 operates normally, a control system for controlling the modular multilevel converter 502 may control the modular multilevel converter to provide reactive power for a grid. In addition, total energy of the submodule capacitors 510 of the modular multilevel converter 502 can be maintained and energy on the branches can be balanced.

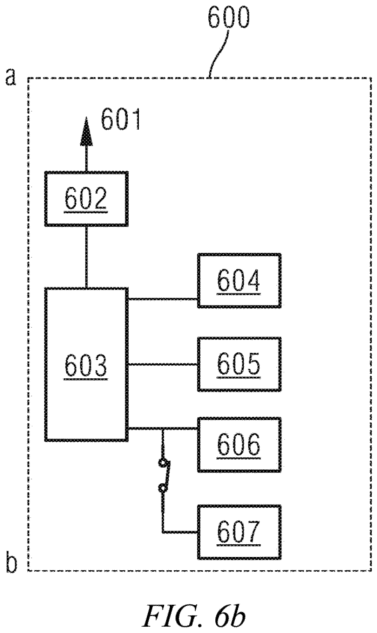

FIG. 6b is a schematic block diagram of a control system 600 of the modular multilevel converter 502.

In FIG. 6b, the control system 600 includes a drive signal 601, a modulation unit 602, a current loop 603, an energy loop 604, a reactive power loop 605, an energy balance loop 606, an additional current component generation unit 607, and the like.

When the modular multilevel converter 502 operates normally, a switch of the additional current component generation unit 607 of the control system 600 is turned off, that is, no additional current component is generated. A person skilled in the art may understand a specific process of controlling the modular multilevel converter 502 by the control system 600 when the modular multilevel converter 502 operates normally. A specific circuit structure of the control system 600 and a control operation during a normal operation are not described in detail herein.

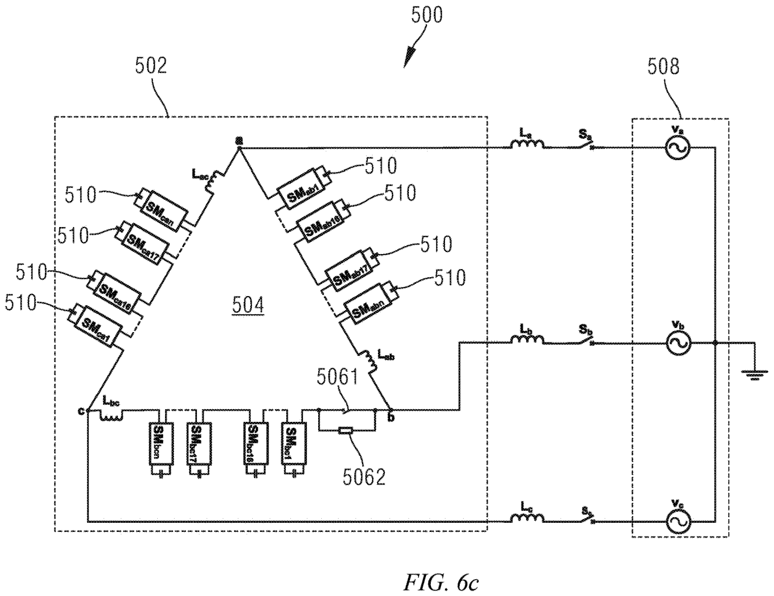

FIG. 6c is a circuit diagram of the modular multilevel converter 502 being switched off.

When the modular multilevel converter 502 starts to be switched off, the drive signal 601 output by the control system 600 for all submodules of the modular multilevel converter 502 is blocked. An output current of the modular multilevel converter 502 is reduced to zero. Then, power switches Sa to Sc in FIG. 6c are turned off, so that the modular multilevel converter 502 is disconnected from an alternating current power source 508. At the same time, the switch 5061 of the discharge circuit 506 is turned off, so that the resistor 5062 of the discharge circuit 506 is inserted into a branch of the modular multilevel converter 502 and starts to operate.

Then, the drive signal 601 output by the control system 600 is activated again, to generate a circulating current in the modular multilevel converter 502. When the circulating current flows through the resistor 5062, energy may be discharged from the submodule capacitor 510.

A value of the circulating current is controlled by using a circulating current reference in the control system 600. In the discharge method according to the present disclosure, the circulating current reference includes two parts. One part is a current provided by the energy balance loop 606 of the control system 600. The current is used to balance energy of the branches of the modular multilevel converter 502. The other part is an additional current component provided by the additional current component generation unit 607 of the control system 600. The additional current component may be a direct current component or an alternating current component.

The additional current component may be used to increase the value of the circulating current, so that a discharge process may be accelerated. In addition, a current value of the additional current component may be adjusted, to adjust a discharge time.

In addition, it should be noted that the direct current component is more effective than the alternating current component in shortening the discharge time.

It should be further noted that, impact on the power source of the control system in a process of discharging energy from the submodule capacitor is described as follows: If a power source of the control system comes from an alternating current grid, the power source of the control system is not affected in a process of discharging the voltage of the capacitor. In another case, the power source of the control system directly comes from the submodule capacitor. In this case, a large buffer capacitor may be added to the input of the power source of the control system. The buffer capacitor may have sufficient energy to maintain normal operation of the power source of the control system in a discharge process of the submodule capacitor.

In comparison with a circuit in the prior art, in the modular multilevel converter according to the present disclosure, only one switch and one resistor may be added. Therefore, a smaller number of components are added. In this way, system costs and the system volume and complexity can be reduced.

The modular multilevel converter and the discharge method therefor according to the present disclosure can implement quick discharge. Therefore, a discharge time is greatly shortened and the safety of a converter system is improved.

In addition, the value of the added current component is adjusted to adjust the value of the circulating current, so that the discharge time can be controlled.

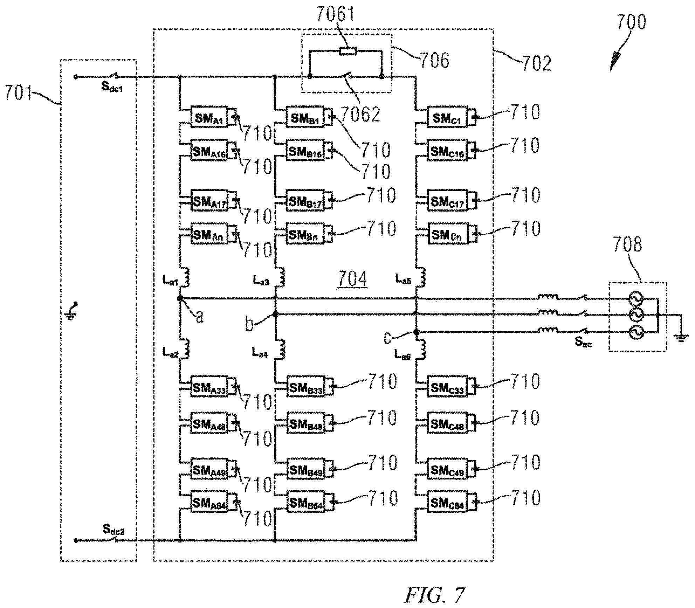

FIG. 7 is an exemplary topology diagram of a modular multilevel converter system 700 according to another embodiment of the present disclosure.

In FIG. 7, block 702 is a modular multilevel converter according to another embodiment of the present disclosure, block 708 is an alternating current power source, and block 701 is a direct current side. A modular multilevel converter 704 in FIG. 7 operates through a double star connection.

In the modular multilevel converter 702 according to the present disclosure shown in FIG. 7, a discharge circuit 706 is added between an upper bridge arm of a phase B and an upper bridge arm of a phase C of the double-star modular multilevel converter 704.

A specific circuit topology of the double-star modular multilevel converter 704 is not described in detail herein, and the discharge circuit 706 is mainly described.

In an example, the discharge circuit 706 includes one switch 7061 and one resistor 7062 that are connected in parallel.

Specifically, the switch 7061 may be a contactor or a power semiconductor device such as an IGBT or a MOSFET. Preferably, a contactor is selected as the switch because losses of the contactor are low.

A person skilled in the art may understand that the discharge circuit 706 is not limited to only one switch and one resistor and the switch is not limited to a specific type. Details are not described herein again.

In FIG. 7, the discharge circuit 706 is connected between the upper bridge arm of the phase B and the upper bridge arm of the phase C of the double-star modular multilevel converter 704. It may be understood that the discharge circuit 706 may be connected between upper bridge arms or lower bridge arms of any two phases, or may be connected to an upper bridge arm or a lower bridge arm of any one of the phase A, the phase B, and the phase C.

A specific process of a method for discharging the modular multilevel converter 702 shown in FIG. 7 is the same as that of the method for discharging the modular multilevel converter 502 according to the present disclosure shown in FIG. 6a to FIG. 6c. Details are not described herein again.

Exemplary embodiments are described above in combination with the specific embodiments described in the accompanying drawings, but do not represent all the embodiments that can be implemented or fall within the protection scope of the claims. The term "exemplary" used throughout the present specification means "used as an example, an instance or an illustration", but does not mean "preferred" or "advantageous" over the other embodiments. For the purpose of providing an understanding of the described technologies, the specific embodiments include specific details. However, the technologies can be implemented without the specific details. In some embodiments, in order to avoid obscuring the described concepts in the embodiments, commonly known structures and apparatuses are shown in the form of a block diagram.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants without departing from the protection scope of the present disclosure. Therefore, the present disclosure is not limited to the examples and designs described herein, and corresponds to the widest scope in accordance with the principles and novel features disclosed herein.

## Claims

1. A modular multilevel converter (502), comprising:
a delta modular multilevel converter (504), wherein
a discharge circuit (506) is connected to at least one branch (ab, bc, ca) of the delta modular multilevel converter (504).

2. The modular multilevel converter (502) as claimed in claim 1, wherein the discharge circuit (506) comprises at least one switch (5061) and at least one resistor (5062) that are connected in parallel.

3. The modular multilevel converter (502) as claimed in claim 2, wherein the switch (5061) is a contactor or a power semiconductor device.

4. A modular multilevel converter (702), comprising:
a double-star modular multilevel converter (704), wherein
a discharge circuit (706) is connected in at least one of the following positions of the double-star modular multilevel converter (704) : between upper bridge arms of any two of three phases (A, B, C), between lower bridge arms of any two of the three phases (A, B, C), on an upper bridge arm of any one of the three phases (A, B, C), and on a lower bridge arm of any one of the three phases (A, B, C).

5. The modular multilevel converter (702) as claimed in claim 4, wherein the discharge circuit (706) comprises at least one switch (7061) and at least one resistor (7062) that are connected in parallel.

6. The modular multilevel converter (702) as claimed in claim 5, wherein the switch (7061) is a contactor or a power semiconductor device.

7. A method for discharging the modular multilevel converter (502, 702) as claimed in any one of claims 1 to 3 or claims 4 to 6, comprising:
keeping the switch (5061, 7061) of the discharge circuit (506, 706) on when the modular multilevel converter (502, 702) operates normally; and
turning off the switch (5061, 7061) of the discharge circuit (506, 706) and discharging energy from a submodule capacitor (510, 710) of the modular multilevel converter (502, 702) through the resistor (5062, 7062) of the discharge circuit (506, 706) when the modular multilevel converter (502, 702) is switched off.

8. The method as claimed in claim 7, wherein the turning off of the switch (5061, 7061) of the discharge circuit (506, 706) and discharging energy from a submodule capacitor (510, 710) of the modular multilevel converter (502, 702) through the resistor (5062, 7062) of the discharge circuit (506, 706) when the modular multilevel converter (502, 702) is switched off comprises:
blocking a drive signal (601) output by a control system (600) for controlling the modular multilevel converter (502, 702), so that an output current of the modular multilevel converter (502, 702) is reduced to zero;
disconnecting the modular multilevel converter (502, 702) from an alternating current power source (508, 708);
turning off the switch (5061, 7061), so that the resistor (5062, 7062) is inserted into a branch of the modular multilevel converter (502, 702);
activating again the drive signal (601) output by the control system (600), so that a circulating current is generated in the modular multilevel converter (502, 702); and
when the circulating current flows through the resistor (5062, 7062), discharging the energy from the submodule capacitor (510, 710) of the modular multilevel converter (502, 702).

9. The method as claimed in claim 5, wherein a value of the circulating current is controlled by using a circulating current reference in the control system (600), and the circulating current reference comprises: a current provided by an energy balance loop (606) of the control system (600) and an additional current component provided by an additional current component generation unit (607) of the control system (600) , wherein the current provided by the energy balance loop (606) is used to balance energy of a branch of the modular multilevel converter (502, 702), and the additional current component is used to adjust the value of the circulating current.

10. The method as claimed in claim 9, wherein the additional current component is a direct current or an alternating current.
